# FASCICULE DE BREVET EUROPEEN

(11) **EP 2 450 834 B1**
(45) Date de publication et mention de la délivrance du brevet: **31.07.2013**
(21) Numéro de dépôt: 11187020.0
(22) Date de dépôt: 28.10.2011
(51) Int. Cl.: G06K 9/00, G06K 9/62

(54) **Procédé et machine de traitement du courrier de filantes avec accumulateurs matriciels**
Verfahren und Maschine zur Verarbeitung von kontinuierlich vorbeilaufender Post mit Matrix-Akkumulatoren
Method and machine for processing moving mail with matrix accumulators

(30) Priorité: 05.11.2010 FR 1059115
(43) Date de publication de la demande: 09.05.2012
(73) Titulaire: Solystic, 94257 Gentilly Cedex (FR)
(72) Inventeur: Benyoub, Belkacem, 91120 PALAISEAU (FR); Piegay, Emmanuel, 75010 PARIS (FR); Letombe, Mathieu, 75010 PARIS (FR)
(74) Mandataire: Prugneau, Philippe

(56) Documents cités:
- EP-A1- 1 622 065
- EP-A1- 1 791 080
- WO-A1-01/86581
- US-B1- 6 901 151

## Description

### Domaine technique

L'invention concerne le domaine du traitement du courrier postal, à savoir des lettres, magazines, paquets et autres objets postaux aptes à être traités automatiquement en machine, notamment dans une machine de tri postal.

L'invention concerne plus particulièrement un procédé pour traiter du courrier selon lequel on suppose que des objets postaux font partie d'un groupe d'objets postaux homogènes ou filante et on effectue pour chaque objet postal de la filante un traitement de reconnaissance par OCR d'une certaine information à reconnaître dans une zone prédéterminée d'intérêt d'une image de l'objet postal, la zone d'intérêt étant associée en mémoire à la filante pour forcer le traitement de reconnaissance par OCR.

L'invention concerne également une machine de traitement du courrier postal, en particulier pour le tri du courrier postal dans des sorties de tri d'un convoyeur de tri, comprenant un système d'acquisition d'images connecté à une unité de traitement de données et de contrôle/commande.

### Technique antérieure

Pour le traitement d'une filante de courriers homogènes, on a déjà recours à des outils logiciels de pointage graphique sur écran d'affichage pour délimiter le bloc d'adresse de destinataire dans l'image et forcer le traitement de reconnaissance par OCR à travailler sur une zone d'image qui correspond à celle où est présent le bloc d'adresse de destinataire. Ces outils sont connus sous le nom de limiteur de zone ou encore "area limiter". Le principe d'utilisation d'un limiteur de zone est de cadrer (« clipping ») le bloc d'adresse de destinataire dans une image de référence d'un objet postal d'une filante prédéterminée. En pratique, un processus de reconnaissance d'adresse par OCR débute par une phase de localisation des blocs d'information dans l'image (bloc de pixels contenant l'information) puis d'ordonnancement des blocs détectés en mettant en priorité celui qui apparaît correspondre au bloc d'information d'adresse de destinataire. L'ordonnancement peut faire appel à des données préenregistrées indicatives d'une position probable des différents blocs d'information (bloc d'adresse d'expéditeur - bloc d'adresse de destinataire - timbres - ... ) sur le courrier. Ces positions probables peuvent varier d'un pays à un autre selon les habitudes et les contraintes des Postes.

Le limiteur de zone permet donc de forcer cette phase de localisation à rechercher le bloc d'information à l'intérieur du cadre désigné par le limiteur de zone ce qui limite les erreurs de reconnaissance. Un tel outil présente l'inconvénient de nécessiter l'intervention manuelle d'un opérateur à l'apparition de la filante dans un flux de courrier ce qui le rend inadapté à des filantes de petite quantité, par exemple des filantes de quelques centaines d'objets postaux, du fait du temps requis pour la manipulation du limiteur de zone. La détection qu'un objet postal fait partie d'une filante ne fait pas l'objet de la présente invention. Il existe différentes méthodes pour détecter automatiquement des filantes à partir de données ou de modèles caractéristiques de filante. Le document de brevet européen EP 1 622 065 décrit notamment un procédé de détection automatique de filantes pour le paramétrage automatique du lecteur OCR et la détection automatique du taux de chaque filante en vue de l'application de réduction du tarif d'expédition proportionnelle à ce taux. Ce procédé comporte une étape de capture d'image numérique de chaque envoi postal, une étape de reconnaissance automatique d'adresse par OCR et une étape d'extraction d'attributs d'image pour l'identification de l'appartenance de l'envoi postal à une filante dont le modèle est préalablement enregistré dans un catalogue de modèle. Ce catalogue est dynamique et les modèles qu'il contient évoluent par enrichissement des informations relatives aux envois postaux traités.

On connaît aussi du document de brevet EP 0 938 066 un procédé pour traiter du courrier faisant partie d'une filante dans lequel on effectue une corrélation graphique entre deux images respectivement de deux objets postaux consécutifs dans un flux d'objets postaux pour détecter que ces deux images sont homogènes et que donc les deux objets postaux font partie de la même filante.

On connait également du document de brevet EP 1 791 080 un procédé de tri d'envois postaux au cours duquel on recherche une inscription dans une première zone de l'envoi postal courant, puis en cas d'échec de détection dans cette première zone, on recherche l'inscription dans une seconde zone. La ou les zones dans lesquelles l'inscription a été détectée sont mémorisées et des indications sur le document en sont déduites, par exemple sur le type de document à traiter. Les zones de recherche peuvent être déterminées à l'issu de la détection réalisée sur l'envoi postal dans son intégralité ou prédéterminées et stockées dans une mémoire pour être utilisées lors de la détection ciblée sur ces zones mémorisées. La détection des zones peut être réalisée par le biais d'une matrice de coordonnées.

On connait par ailleurs du document de brevet WO 01/86 581, un procédé de tri d'envois postaux au cours duquel on détecte et on lit de manière automatique l'adresse de destination de l'envoi postal courant. Cette adresse de destination est prévue sur une étiquette comportant notamment un code barre indiquant l'expéditeur. A chaque expéditeur correspond un ou plusieurs positionnements standards du bloc d'adresse enregistrés dans une base de données. La lecture des codes barre permet donc d'identifier rapidement l'expéditeur et de centrer la recherche de l'adresse sur les positionnements standards. La base de données peut être construite au fur et à mesure selon la probabilité de répétition du positionnement.

On connait enfin du document de brevet US 6,901,151 un procédé de tri d'envois postaux à réexpédier au cours duquel le tri est facilité par l'analyse de similarité visuelle entre l'envoi postal courant et les objets déjà connus.

De manière générale, la localisation automatique du bloc d'adresse de destinataire dans une unité de reconnaissance d'adresse par OCR s'appuie sur trois critères : la morphologie du bloc, la position du bloc dans l'image comparée à des positions standards spécifiques à un pays par exemple, son contenu lexical.

Le processus de localisation peut identifier un bloc de pixels comme étant un bloc d'adresse de destinataire alors qu'il s'agit par exemple d'un message publicitaire sur l'objet postal. Dans ce cas, il n'y aura pas d'adresse reconnue de façon univoque et le traitement en machine de l'objet postal aboutira à une situation de rejet de l'objet postal dans une sortie de tri prédéterminée.

Le processus de localisation du bloc d'adresse peut aussi confondre le bloc d'adresse de destinataire avec le bloc d'adresse d'expéditeur qui figure notamment sur du courrier de masse. Dans ce cas, une adresse postale pourra être reconnue automatiquement par OCR mais le traitement en machine de cet objet postal aboutira à une situation d'erreur c'est-à-dire que cet objet postal sera mal trié parmi les autres objets postaux ce qui engendrera une erreur de livraison de cet objet postal et donc des coûts supplémentaires de traitement pour le centre postal.

### Exposé de l'invention

Le but de l'invention est de fournir un procédé pour traiter des objets postaux faisant partie de filantes tel qu'indiqué plus haut, dans lequel une assistance automatique à la localisation du bloc d'adresse de destinataire (ou d'une autre zone d'intérêt d'image dans lequel une certaine information doit être reconnue automatiquement) est prévue pour réduire en particulier le taux d'erreur de reconnaissance d'adresse de destinataire.

A cet effet, l'invention a pour objet un procédé de traitement du courrier postal selon la revendication 1.

Le procédé selon l'invention peut présenter les particularités suivantes.

Avantageusement, la carte de flots optiques peut être calculée à l'aide d'une méthode de corrélation graphique locale entre des blocs de pixels des deux images d'objets postaux de la filante.

La dite certaine information à reconnaître par OCR peut être une information d'adresse de destinataire, ou encore une information d'adresse d'expéditeur, ou encore une information d'affranchissement, ou encore une indication picturale comme un logo ou une flamme publicitaire sur laquelle des traitements de données peuvent être déclenchés au cours du tri postal par exemple.

L'invention part du constat que dans une filante d'objets postaux provenant d'un même expéditeur, le cadre délimitant le bloc d'adresse de destinataire par exemple a dans les images des différents objets postaux de la filante une position spatiale relativement stable, par exemple dans le coin inférieur droit de l'image.

Si on considère qu'à chaque traitement OCR conduisant à une reconnaissance univoque d'une adresse de destinataire, on peut récupérer du traitement OCR les coordonnées précises du cadre dans lequel une adresse a été reconnue de façon univoque par OCR, par exemple les coordonnées des coins diamétralement opposés du cadre englobant tous les caractères de l'adresse de destinataire reconnus par l'OCR, on obtiendra au fil des opérations de reconnaissance par OCR sur une série d'objets postaux faisant partie d'une même filante, une série de cadres qui doivent normalement « se chevaucher » ou se superposer avec une certaine tolérance.

L'idée à la base de l'invention est de suivre dynamiquement l'évolution de la zone de chevauchement mutuel de ces cadres dans un accumulateur laquelle statistiquement tend à devenir de plus en plus stable au fur et à mesure du traitement des objets postaux de la filante et d'exploiter cette zone de chevauchement mutuel de plus en plus stable pour délimiter dynamiquement la zone d'intérêt d'image dans laquelle le traitement OCR est appliqué sur les objets de la filante. Cette zone de chevauchement stable est identifiée dans l'accumulateur par un score ou une valeur d'accumulation extremum qui correspond en fait à une répétition maximale du chevauchement mutuel.

Selon l'invention, on utilise successivement un premier accumulateur matriciel d'un premier type consolidé à partir d'indications dérivées du traitement de reconnaissance OCR en incrémentant les éléments unitaires d'accumulation de l'accumulateur matriciel, et un second accumulateur matriciel d'un second type consolidé à partir d'indications dérivées de cartes de flots optiques en incrémentant les éléments unitaires d'accumulation de l'accumulateur matriciel, ces deux accumulateurs ayant une évolution indépendante de façon à localiser avec plus de robustesse le bloc de pixels de l'adresse de destinataire dans les images d'objets postaux faisant partie d'une même filante.

L'un ou les deux accumulateurs peuvent être exploités aussi pour valider l'ordonnancement de différents blocs d'information détectés au cours d'un processus de reconnaissance d'adresse par OCR.

Selon l'invention, on utilise d'abord le second accumulateur pour délimiter ladite zone d'intérêt dans les images de premiers objets postaux de la filante et ensuite le premier accumulateur pour délimiter ladite zone d'intérêt dans les images de seconds objets postaux subséquents aux premiers objets postaux dans la succession des objets postaux de la filante du fait qu'on a constaté que le premier accumulateur devient statistiquement stable après le second accumulateur.

De manière avantageuse, ledit premier accumulateur matriciel est exploité comme un limiteur de zone d'intérêt et le second accumulateur matriciel est exploité en consolidation d'une matrice de scores produite par une phase d'apprentissage.

L'invention porte également sur une machine de traitement du courrier postal, en particulier pour le tri du courrier postal dans des sorties de tri d'un convoyeur de tri, comprenant un système d'acquisition d'images connecté à une unité de traitement de données et de contrôle/commande dans laquelle ladite unité est agencée pour mettre en oeuvre le procédé tel que décrit précédemment.

### Description sommaire des dessins

Un exemple de mise en oeuvre du procédé selon l'invention est décrit ci-après plus en détails en relation avec les dessins.
La figure 1 illustre de façon très schématique une machine de tri postal.
La figure 2A illustre un principe de réalisation d'un premier type d'accumulateur.
La figure 2B illustre le principe de la consolidation du premier type d'accumulateur.
La figure 3 illustre un principe de réalisation du second type d'accumulateur.
La figure 4A illustre le principe de la corrélation graphique locale mise en oeuvre pour consolider le second type d'accumulateur.
La figure 4B illustre le principe de la consolidation du second type d'accumulateur.
La figure 5 est un organigramme montrant un exemple de mise en oeuvre du procédé de traitement selon l'invention exploitant les deux types d'accumulateur pour localiser le bloc d'adresse de destinataire dans des images d'objets postaux faisant partie d'une filante.
La figure 6 illustre schématiquement sous la forme d'un schéma bloc un processus de reconnaissance d'adresse par OCR.

### Description des modes de réalisation

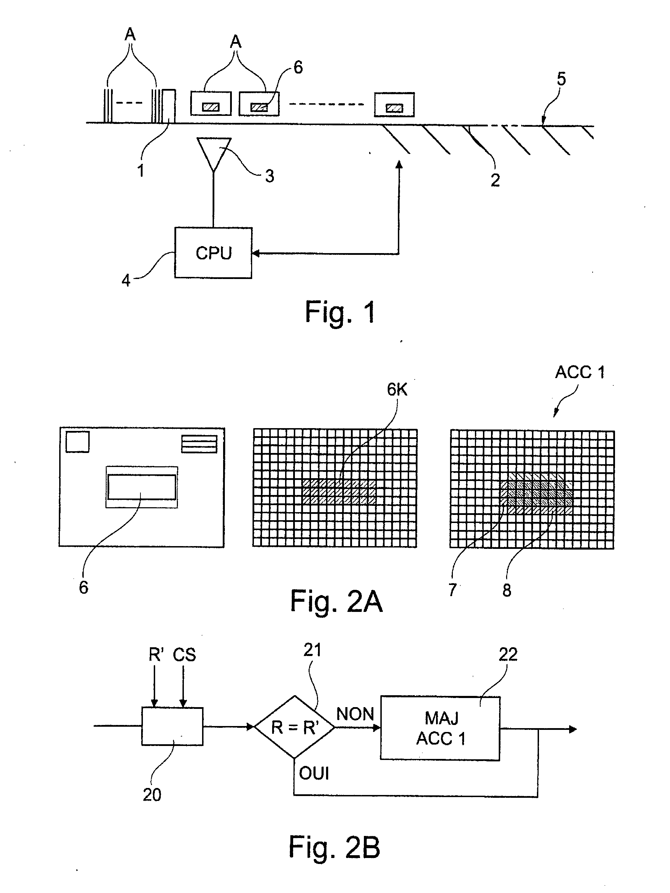

Sur la figure 1 on a illustré de façon très schématique une machine de tri postal comprenant un dépileur 1 qui met en série sur chant des objets postaux A disposés en pile dans un magasin d'alimentation. Les objets postaux A sont déplacés sur chant dans un convoyeur de tri 2 à bandes par exemple et passent devant un système d'acquisition d'images numériques 3 connecté à une unité de traitement de données et de contrôle/commande 4. L'unité de traitement de données et de contrôle/commande 4 agit sur le convoyeur de tri 2 pour diriger les objets postaux vers des sorties de tri telles que 5.

Le processus de traitement du courrier selon l'invention est mis en oeuvre essentiellement dans l'unité de traitement de données et de contrôle/commande 4 sous la forme d'un programme d'ordinateur.

Le système d'acquisition d'images numériques 3 sert à la reconnaissance par OCR d'informations d'adresse apposées à la surface des objets postaux. Il est prévu en aval du dépileur 1, comme cela est bien connu, en vue de reconnaître notamment une adresse de destinataire représentée schématiquement par un petit rectangle 6 sur une face d'un objet postal. Quand l'adresse sur un objet postal est reconnue de façon univoque par l'unité de reconnaissance d'adresse par OCR 4, celle-ci commande le convoyeur de tri 2 pour diriger l'objet postal vers une sortie de tri 5 correspondante comme cela est bien connu.

Dans ce processus de traitement du courrier, il est donc prévu qu'une image numérique d'un objet postal courant, placé dans un flux d'objets postaux A tels que représentés sur la figure 1, est acquise à l'aide du système d'acquisition d'images numériques 3, par exemple une caméra numérique en multi-niveaux de gris, et qu'à partir de cette image numérique, l'unité de traitement de données et de contrôle/commande 4 de la machine est apte à détecter si cet objet postal fait partie d'une filante, c'est-à-dire d'un groupe d'objets postaux homogènes provenant d'un même expéditeur.

Les filantes peuvent être constituées d'une série plus ou moins importante d'objets postaux uniformes consécutifs provenant d'un même expéditeur. En général, une filante comporte plusieurs centaines d'objets postaux homogènes. Dans le cas le plus simple, ces objets postaux se différencient d'un point de vue graphique seulement par une variation de l'information d'adresse du destinataire du courrier.

Globalement les données caractérisant une filante pour reconnaître qu'un certain objet postal appartient à cette filante sont regroupées en mémoire dans l'unité de traitement de données et de contrôle/commande 4 dans une sorte de dictionnaire numérique ou répertoire. Des données de réglage sont également associées en mémoire à chaque filante pour forcer en conséquence le traitement du processus de reconnaissance par OCR sur une zone d'intérêt de l'image.

Ces données caractéristiques ou modèle de la filante peuvent décrire plusieurs attributs des objets postaux de la filante comme le type du courrier (papier ou sous enveloppe en plastique) ou encore les caractéristiques graphiques du courrier (position constatée du bloc d'adresse de destinataire - position constatée du bloc d'adresse d'expéditeur - position standard d'un code barres, ....), ces indications pouvant permettre aussi d'améliorer la fiabilité du traitement des objets postaux.

Le procédé de traitement selon l'invention vise à renforcer principalement la robustesse de la détection du bloc d'adresse de destinataire en apportant une assistance automatique à la localisation de ce bloc d'adresse dans le traitement de reconnaissance d'adresse par OCR dans des situations difficiles, par exemple quand la surface des objets postaux d'une filante est chargée d'autres informations que l'information d'adresse de destinataire, ou encore que cette adresse de destinataire est dans une position non standard.

Le procédé selon l'invention repose donc sur l'utilisation de deux accumulateurs matriciels qui fournissent une délimitation dynamique de la zone d'intérêt dans les images des objets postaux d'une filante sur laquelle on force le traitement de reconnaissance d'adresse par OCR. L'accumulateur matriciel selon l'invention est une matrice dont chaque élément unitaire correspond à un pixel d'image ou à un groupe de pixels d'une image numérique d'objet postal selon le niveau de résolution choisi pour l'accumulateur. Chaque élément unitaire de l'accumulateur est un compteur qui est incrémenté, lors d'une phase de consolidation, au fur et à mesure des traitements des objets postaux successifs de telle sorte que les éléments unitaires ayant une valeur extremum tendent à délimiter la zone d'image prédéterminée sur laquelle est appliqué l'OCR.

Comme on le verra par la suite, on utilise deux accumulateurs matriciels indépendants l'un de l'autre pour délimiter de façon dynamique une zone d'image prédéterminée correspondant au bloc d'adresse de destinataire : un premier accumulateur matriciel qui est consolidé avec des indications dérivées directement du processus de reconnaissance d'adresse par OCR, un second accumulateur matriciel qui est consolidé avec des indications dérivées d'une corrélation graphique entre des images des objets postaux.

De manière générale, le premier accumulateur matriciel peut permettre de localiser automatiquement tout type d'information reconnaissable dans l'image d'un objet postal comme l'adresse d'expéditeur mais aussi un marquage d'affranchissement ou encore un logo ou une indication picturale comme une flamme publicitaire.

Sur la figure 2A, on a illustré le premier accumulateur matriciel désigné par ACC1 en regard d'une image numérique d'un objet postal sur laquelle apparaît le bloc d'adresse de destinataire 6. L'accumulateur matriciel ACC1 est superposable graphiquement à l'image numérique contenant le bloc d'adresse de destinataire 6. Sur cette figure les pixels 6K désignent les pixels d'intérêt. Dans l'accumulateur ACC1, on a représenté par des carrés les éléments unitaires d'accumulation comprenant ici des éléments unitaires 7 en sombre et des éléments unitaires 8 en plus clair. Si les éléments unitaires 7 sont ceux qui ont la valeur d'accumulation extremum après consolidation, les éléments unitaires 7 délimitent globalement la zone d'image correspondant au cadre du bloc d'adresse de destinataire 6.

Le principe de la consolidation de l'accumulateur matriciel ACC1 est d'identifier au fur et à mesure du traitement des objets postaux successifs de la filante des pixels d'intérêt et d'incrémenter (d'une unité par exemple) la valeur d'accumulation des éléments unitaires 7 de l'accumulateur matriciel ACC1 qui coïncident spatialement (en superposition) avec ces pixels d'intérêt.

Plus particulièrement, pour identifier ces pixels d'intérêt, on dérive du traitement de reconnaissance par OCR sur l'image d'un objet postal courant de la filante les coordonnées de position spatiale du bloc de pixels sur lequel la reconnaissance par OCR a abouti de façon univoque, dans le cas d'exemple quand la reconnaissance automatique par OCR a abouti à une adresse postale de distribution d'un destinataire.

On sait toutefois qu'un traitement de reconnaissance par OCR peut dériver et rendre un résultat erroné par exemple si le bloc d'adresse de destinataire est confondu avec le bloc d'adresse d'expéditeur. Pour lever la confusion, avant de consolider l'accumulateur ACC1 avec ces pixels d'intérêt, on peut comparer le contenu textuel et postal du bloc d'adresse de destinataire 6 décodé de façon univoque par l'OCR pour l'objet courant avec celui décodé par l'OCR et enregistré pour l'objet précédant cet objet courant dans la mesure ou ces deux objets font partie de la même filante. Par exemple, si le contenu du bloc d'adresse de destinataire 6 diffère d'un objet à un autre de la filante, on peut considérer qu'il n'y a pas de situation de confusion entre un bloc d'adresse de destinataire 6 et un bloc d'adresse d'expéditeur alors qu'à l'inverse si le contenu ne diffère pas ou très faiblement, on peut considérer que le traitement de reconnaissance par OCR est dans une situation de confusion de bloc d'adresse.

Donc avant de consolider l'accumulateur matriciel ACC1 avec des pixels d'intérêt dérivés d'un traitement de reconnaissance par OCR pour un objet courant de la filante, on contrôle le contenu du bloc d'adresse retourné par l'OCR avec le contenu du bloc d'adresse retourné par l'OCR pour l'envoi précédent pour détecter la présence ou l'absence d'une situation de confusion de bloc d'adresse et sur détection d'une absence de confusion, on incrémente les éléments unitaires 7 de l'accumulateur matriciel ACC1 qui coïncident avec les pixels d'intérêts comme indiqué plus haut.

Sur la figure 2A, les éléments unitaires 7 ont une valeur d'accumulation plus importante (on considère qu'il s'agit de la valeur extremum instantanée d'accumulation) que les éléments unitaires 8 pour illustrer le fait que les indications de positions spatiales retournées par l'OCR peuvent différer d'un objet postal à un autre même quand ces objets postaux font partie d'une même filante et sont graphiquement homogènes. Toutefois, au fur et à mesure du traitement de reconnaissance par OCR des objets postaux successifs faisant partie de la même filante, la zone délimitée par les éléments unitaires 7 tend statistiquement à se stabiliser si bien sûr la zone de l'image dans laquelle l'information à décoder par OCR reste dans une position stable. Par ailleurs, si il y a une dérive de la position de cette zone au cours du défilement des objets postaux de la filante, cette dérive va se répercuter par un déplacement de la zone délimitée par les éléments unitaires 7 dans l'accumulateur matriciel ACC1.

Le processus de consolidation de l'accumulateur matriciel ACC1 est illustré plus en détail sur la figure 2B. En 20, des indications CS de position spatiale sont récupérées de l'OCR avec un résultat R de reconnaissance d'adresse. En 21, le résultat R est comparé au résultat précédent R' enregistré en mémoire. Si les deux résultats R et R' sont différents à un certain niveau de tolérance près (les adresses de destinataire sont normalement différentes d'un objet à un autre), en 22 les pixels d'intérêt 6K sont identifiés à partir des indications CS et les éléments unitaires 7 de l'accumulateur matriciel ACC1 qui coïncident spatialement avec les pixels d'intérêt sont incrémentés d'une unité. La mise à jour ou consolidation de l'accumulateur matriciel ACC1 est alors terminée. Si les deux résultats R et R' sont identiques à un certain niveau de tolérance près (il s'agit de la même adresse d'expéditeur), le processus n'effectue pas la consolidation de l'accumulateur matriciel ACC1.

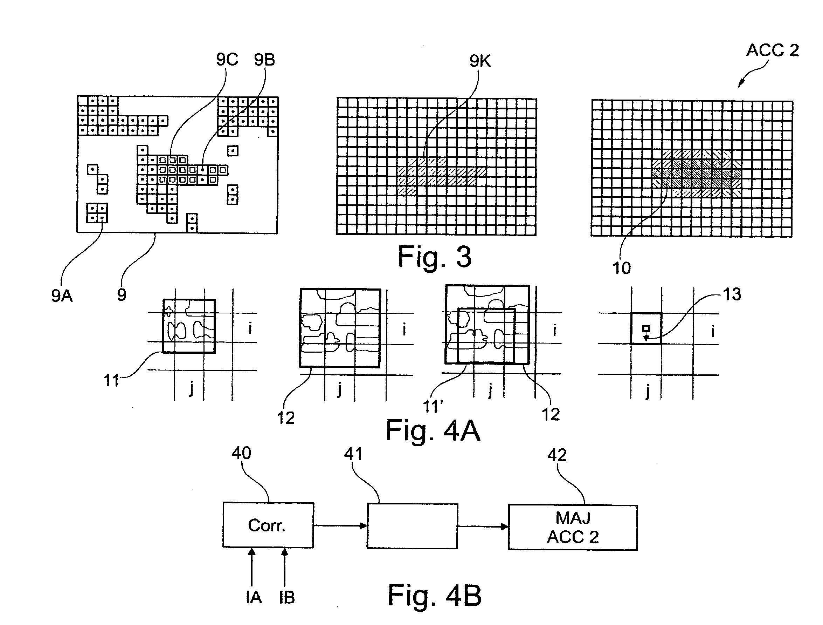

Sur la figure 3, on a illustré un second type d'accumulateur matriciel désigné par ACC2 en regard d'une carte de champs vectoriels de mouvements 9 (ou carte de flots optiques). L'accumulateur matriciel ACC2 se présente aussi comme une matrice dont les éléments unitaires d'accumulation sont des compteurs. Les éléments unitaires de cette matrice se superposent comme pour la matrice de l'accumulateur matriciel ACC1 aux pixels des images des objets postaux d'une filante. Les carrés 10 en foncé désignent des éléments unitaires ayant une valeur d'accumulation extremum. Les éléments unitaires 10 délimitent globalement une zone qui correspond à un bloc d'adresse de destinataire.

Le calcul des champs vectoriels de mouvement dans des images par une méthode de corrélation graphique locale de blocs de pixels d'image est connu en soi. Ces champs vectoriels sont représentatifs des variations dans une image animée en terme de déplacement des points d'image. Dans la présente invention, on exploite une technique de flots optiques à partir de deux images IA et IB respectivement de deux objets postaux consécutifs d'une filante pour détecter les déplacements relatifs des points d'image d'une image IA par rapport à l'autre image IB, ces déplacements de pixels survenant principalement au niveau du bloc d'adresse de destinataire quand il s'agit de deux images homogènes de deux objets postaux faisant partie d'une même filante.

La technique de la corrélation graphique locale est connue en soi et consiste globalement dans les étapes suivantes. On découpe une image IA (non représentée) en un maillage de petits blocs carrés. Pour chaque bloc de pixels dans l'image IA, on recherche dans une zone correspondante d'une image IB (non représentée) un bloc de pixels qui maximise la valeur de corrélation graphique locale entre les deux blocs de pixels. Le calcul de la valeur de corrélation locale est par exemple le produit de deux coefficients de corrélation (rapport entre un coefficient de covariance et un produit de deux écarts-types), l'un obtenu à partir de la projection en ordonnées des intensités de pixels du bloc de l'image IA et des pixels du bloc de l'image IB, l'autre obtenu à partir de la projection en abscisses des intensités de pixels du bloc de l'image IA et des pixels du bloc de l'image IB.

Sur la figure 4A, on a illustré par 11 un bloc de pixels de l'image IA, par exemple un bloc de 15x15 pixels dans une image numérique d'un objet postal. On a illustré par 12 une zone (par exemple un bloc de 30x30 pixels) dans une autre image IB d'un autre objet postal dans laquelle une corrélation locale avec le bloc de pixels 11 est recherchée. Sur la figure 4, la référence 11' dans l'image IB désigne le bloc de pixels corrélé graphiquement au bloc de pixels 11. Le décalage spatial en abscisses et en ordonnées entre les deux blocs de pixels 11 et 11' dans les images respectivement IA et IB est représentatif d'un déplacement local entre les deux images IA et IB. Ce décalage spatial peut être évalué et représenté sous la forme d'un champ vectoriel de mouvement ici représenté symboliquement par un vecteur orienté 13.

En revenant à la figure 3, la carte de champs vectoriels de mouvements 9 constitue donc une carte de flots optiques (ou de champs vectoriels de mouvements) qui est indicative des variations en terme de mouvement relatif de points d'image entre deux images ici respectivement de deux objets postaux consécutifs faisant partie d'une même filante. Dans cette carte de champs vectoriels de mouvements 9 de flots optiques, on a illustré plusieurs types de champs vectoriels de mouvement représentés par des « pixels » différents 9A, 9B et 9C de la carte de champs vectoriels de mouvements 9.

Les pixels 9A sont représentatifs d'une corrélation locale de blocs de pixels sans déplacement local ce qui traduit que les deux images IA et IB se superposent graphiquement localement à l'identique.

Les pixels 9B sont représentatifs d'une corrélation locale de blocs de pixels en présence d'un déplacement local ce qui traduit que les deux images IA et IB se superposent graphiquement localement à l'identique mais avec un décalage relatif. Pour ces pixels 9B, le déplacement local qui est représenté par un vecteur orienté 13 peut dans le cadre de l'invention avoir comme origine un décalage global de l'image IA par rapport à l'image IB par exemple du fait d'une instabilité dans le convoyage des objets postaux. Le déplacement local au niveau d'un pixel 9B peut aussi avoir comme origine une différence localisée dans le graphisme entre les deux images IA et IB par exemple du fait que les adresses de destinataires dans les deux images IA et IB homogènes sont différentes. A noter sur l'illustration de la figure 3, les vecteurs orientés 13 des pixels 9B n'ont pas tous la même orientation ce qui signifie que dans l'exemple, l'origine du mouvement n'est pas un décalage global de l'image mais une différence localisée.

Les pixels 9C sont représentatifs d'une absence de corrélation locale de blocs de pixels ce qui traduit que les deux images IA et IB ne se superposent pas graphiquement à l'identique localement.

Les zones blanches dans la carte de champs vectoriels de mouvements 9 correspondent à des zones d'image sans graphisme et donc sans intérêt pour la formation de l'accumulateur matriciel ACC2. Ces zones blanches sont les zones de la surface des objets postaux de couleur unie ne portant aucune information à reconnaître par OCR.

Selon l'invention, l'accumulateur matriciel ACC2 est consolidé en incrémentant les éléments unitaires d'accumulation tels que 10 qui coïncident spatialement (selon une superposition comme pour l'accumulateur matriciel ACC1) avec des pixels d'intérêt identifiés à partir de la carte de flots optiques 9. Ces pixels d'intérêts représentés par 9K sur la figure 3 sont les pixels 9C de la carte de flots optiques 9 représentatifs d'une absence de corrélation locale et les pixels 9B de la carte de flots optiques 9 représentatifs d'une corrélation locale avec un déplacement spatial mais seulement les pixels 9B qui ne résultent pas d'un décalage global d'image comme indiqué plus haut. Les pixels 9B qui ne résultent pas d'un décalage global d'image ont par exemple un pixel voisin 9B mais ayant un vecteur orienté 13 différemment.

La figure 4B illustre le principe de la consolidation de l'accumulateur matriciel ACC2. A chaque image IA d'un objet postal courant faisant partie d'une filante, on applique en 40 sur cette image IA et celle IB de l'objet postal précédant consécutivement cet objet courant et faisant partie de la même filante, un traitement de corrélation graphique locale (après une étape de filtrage éventuelle) comme indiqué plus haut pour former une carte de flots optiques 9 et à partir de cette carte de flots optiques 9 on identifie en 41 des pixels (ou des blocs de pixels) d'intérêt 9K. Puis on consolide (on met à jour) l'accumulateur matriciel ACC2 en incrémentant d'une unité les éléments unitaires de l'accumulateur matriciel ACC2 qui coïncide avec ces pixels d'intérêt. Au fur et à mesure des traitements par OCR pour les objets postaux successifs faisant partie de la filante, la consolidation de l'accumulateur matriciel ACC2 tend à mettre en évidence aussi une zone relativement stable d'éléments unitaires 10 ayant chacun une valeur d'accumulation extremum.

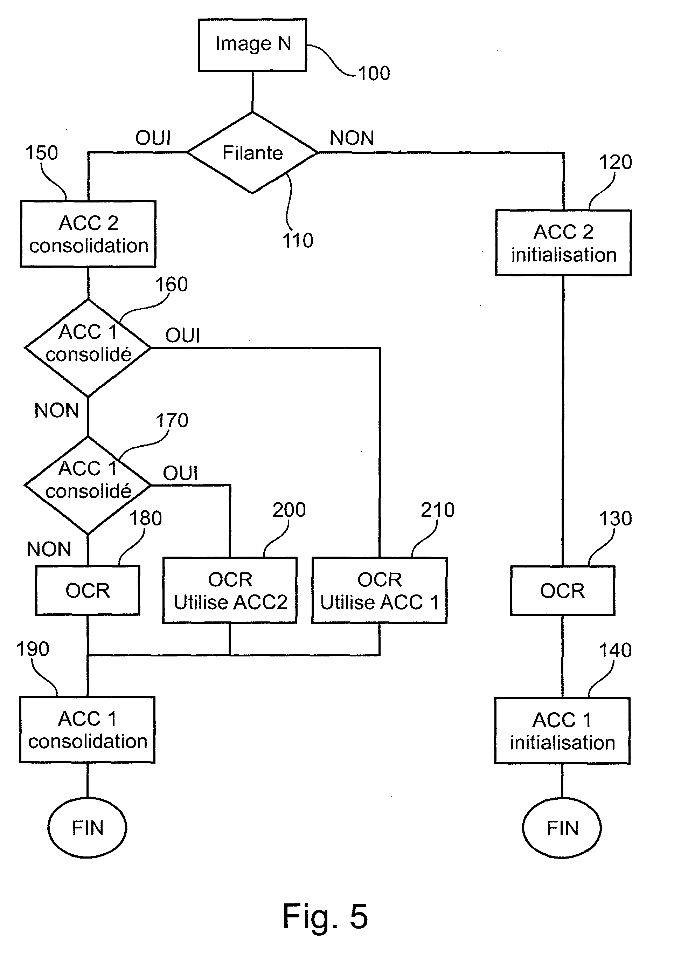

Sur la figure 5, un exemple du processus de localisation automatique du bloc d'adresse de destinataire selon l'invention est illustré très schématiquement sous la forme d'un organigramme.

A l'étape 100, une image numérique N d'un objet postal courant A est fournie par la caméra numériques 3 à l'unité de traitement de données et de contrôle/commande 4.

Dans l'unité de traitement de données et de contrôle/commande 4, à l'étape 110 il est décidé à partir de l'image numérique N par tout moyen adapté si l'objet postal fait partie ou non d'une filante répertoriée dans un dictionnaire maintenu en mémoire par l'unité 4.

En 120, il est supposé que l'objet postal courant ne fait pas partie d'une filante répertoriée dans le dictionnaire. Le processus de traitement se poursuit par la création dans le dictionnaire des filantes d'un nouvel enregistrement de filante. Celui-ci contient l'accumulateur matriciel ACC2 initialisé à zéro (la valeur d'accumulation de tous les éléments unitaires est à zéro).

En 130, un traitement de reconnaissance standard est appliqué sur l'image N, c'est-à-dire sans assistance pour la localisation automatique du bloc d'adresse de destinataire.

En 140, le processus de traitement se poursuit par la création de l'accumulateur matriciel ACC1 initialisé à zéro (la valeur d'accumulation des éléments unitaires est à zéro) dans l'enregistrement de la filante créée en 120. Puis le processus revient à l'étape initiale 100.

En 150, il est supposé maintenant que l'objet postal courant fait partie d'une filante dont le modèle de données caractéristiques est enregistré dans le dictionnaire des filantes. Il est entendu que cet objet postal est donc précédé d'au moins un autre objet postal appartenant à la même filante dans le flux de courrier A et dont l'image numérique N-1 a été conservée en mémoire par l'unité de traitement de données et de contrôle/commande 4.

Le traitement débute par la consolidation de l'accumulateur matriciel ACC2 à partir de la carte de flots optiques 9 calculée avec l'image courante N de l'objet courant et l'image N-1 de l'objet postal précédant cet objet courant.

Comme on peut le voir sur la figure 5, on utilise d'abord l'accumulateur matriciel ACC2 sur les premiers objets postaux de la filante, tandis que l'accumulateur matriciel ACC1 est utilisé après le passage d'un nombre significatif d'objets postaux subséquents faisant partie de la filante. On peut considérer que le nombre significatif d'objets postaux est un paramètre de réglage du processus. Il peut par exemple être fixé à 3 objets postaux dans le cas de l'accumulateur matriciel ACC2, et au moins une dizaine dans le cas de l'accumulateur matriciel ACC1.

Si à l'étape 160, un nombre suffisant d'objets postaux de la filante a déjà été traité, de sorte que l'accumulateur matriciel ACC1 est suffisamment consolidé, le processus de traitement se poursuit à l'étape 210, par un traitement de reconnaissance par OCR utilisant la délimitation de zone d'image indiquée dans l'accumulateur matriciel ACC1.

Dans la négative à l'étape 160 (l'accumulateur matriciel ACC1 n'a pas encore été suffisamment consolidé), le processus de traitement se poursuit à l'étape 170. Si à cette étape un nombre suffisant d'objets postaux de la filante a déjà été traité, de sorte que l'accumulateur matriciel ACC1 est suffisamment consolidé, le processus de traitement se poursuit à l'étape 200, par un traitement de reconnaissance par OCR utilisant la délimitation de zone d'image indiquée dans l'accumulateur matriciel ACC2.

Dans la négative à l'étape 170 (l'accumulateur matriciel ACC1 n'a pas encore été suffisamment consolidé), le processus se poursuit à l'étape 180, par un traitement de reconnaissance OCR standard, c'est-à-dire sans l'assistance d'une localisation automatique du bloc d'adresse de destinataire avec un accumulateur selon l'invention.

Puis le processus de traitement se poursuit en 190 par la consolidation de l'accumulateur matriciel ACC1 à partir des indications de position spatiale dérivées de l'un des traitements OCR de reconnaissance 180, 200 ou 210.

Puis le processus de traitement revient à l'étape initiale 100 pour un nouvel objet postal.

L'accumulateur matriciel ACC1 peut aussi être exploité pour caractériser un autre bloc d'information que le bloc d'adresse de destinataire, comme le bloc d'adresse d'expéditeur dans la mesure où la position spatiale de ce bloc d'information peut être dérivée aussi d'un traitement de reconnaissance par OCR. Deux accumulateurs matriciel de type ACC1 peuvent être exploités en même temps pour mieux gérer les situations d'erreurs de confusion entre un bloc d'adresse de destinataire et un bloc d'adresse d'expéditeur.

Avec le procédé selon l'invention, on réalise donc une délimitation dynamique, au fur et à mesure du traitement des objets postaux successifs d'une filante, de la zone d'intérêt de l'image dans laquelle le bloc d'adresse de destinataire doit être reconnu par le traitement de reconnaissance d'adresse par OCR ce qui contribue à l'obtention d'une meilleure robustesse de la localisation de ce bloc d'adresse.

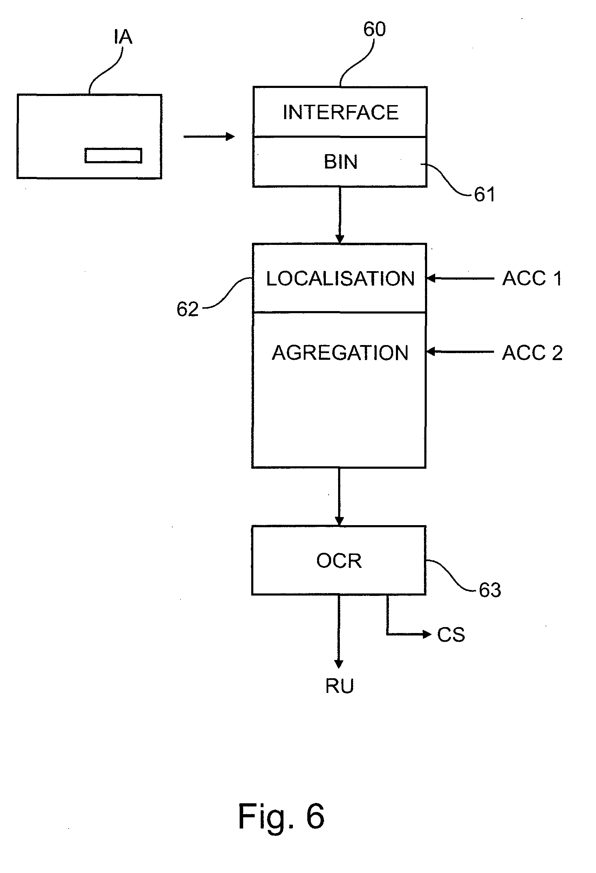

La figure 6 illustre très schématiquement sous la forme d'un schéma bloc un traitement de reconnaissance d'adresse par OCR. Ce traitement comprend une interface d'entrée 60 qui reçoit du système d'acquisition d'images numériques 3 une image numérique IA en multi niveaux de gris d'un objet postal courant et la fournit à un module de seuillage (binarisation) 61. Le module de seuillage 61 transforme l'image IA en une image binaire ayant des pixels à « 0 » ou à « 1 ». L'image binaire est ensuite fournie à un module de localisation d'informations 62. Le module de localisation d'informations 62 balaie l'ensemble des pixels de l'image binaire pour détecter les pixels à « 1 » et ensuite identifier les composantes connexes à ces pixels. A partir de l'identification des composantes connexes sur l'ensemble des pixels de l'image binaire, le module de localisation d'informations 62 agrège les composantes connexes comme cela est connu en soi pour délimiter des blocs de pixels porteurs d'information. A l'issue du traitement dans le module de localisation d'informations 62, les blocs de pixels peuvent être identifiés à partir d'indications de classement préenregistrées, comme indiqué en préambule, comme correspondant à un bloc d'adresse de destinataire, ou à un bloc d'adresse d'expéditeur, etc.... Les blocs de pixels identifiés et ordonnés sont ensuite fournis au module de reconnaissance par OCR 63 pour une reconnaissance de caractère et un décodage de l'information, comme par exemple une adresse postale. Sur la figure 6, la référence RU désigne un résultat de décodage univoque rendu par l'OCR et la référence CS désigne une indication de position spatiale rendue par l'OCR.

Sur la figure 6, on a représenté les deux types d'accumulateur matriciel ACC1 et ACC2 en relation avec le module de localisation 62. Ces deux accumulateurs matriciel ACC1 et ACC2 influencent comme indiqué ci-dessus le fonctionnement du module de localisation 62. L'accumulateur matriciel ACC2 est exploité par le module de localisation 62 plutôt en consolidation d'une matrice de scores produite par une phase d'apprentissage comme cela est connu en soi. En effet, la délimitation de la zone d'image dans l'accumulateur matriciel ACC2 n'a généralement pas un contour franc donc ne peut pas vraiment servir comme cadre limiteur de zone. L'accumulateur matriciel ACC1 est lui exploité par le module de localisation 62 comme un cadre limiteur de zone et dans ce cas la localisation des composantes connexes est réalisée seulement à l'intérieur du cadre limiteur de zone et non pas sur l'ensemble de l'image binaire.

## Revendications

1. Procédé de traitement du courrier postal selon lequel on suppose que des objets postaux font partie d'une succession d'objets postaux homogènes ou filante et on effectue pour chaque objet postal de la filante un traitement de reconnaissance par OCR d'une certaine information à reconnaître dans une zone d'intérêt d'une image de l'objet postal, ladite zone d'intérêt étant associée en mémoire à ladite filante pour forcer ledit traitement de reconnaissance par OCR, **caractérisé en ce qu'**il utilise un accumulateur matriciel (ACC1) d'un premier type dont les éléments unitaires d'accumulation correspondant aux pixels de l'image d'un objet postal de la filante sont incrémentés à partir d'indications dérivées du traitement de reconnaissance OCR dans les images successives des objets de la filante, et un accumulateur matriciel (ACC2) d'un second type dont les éléments unitaires d'accumulation correspondant aux pixels de l'image d'un objet postal de la filante sont incrémentés à partir d'indications dérivées de cartes de flots optiques,
**en ce que** l'accumulateur matriciel (ACC2) d'un second type est d'abord utilisé pour délimiter ladite zone d'intérêt dans les images de premiers objets postaux de la filante et ensuite l'accumulateur matriciel (ACC1) d'un premier type est utilisé pour délimiter ladite zone d'intérêt dans les images de seconds objets postaux subséquents aux premiers objets postaux dans la succession des objets postaux de la filante,
**en ce que** la délimitation d'une zone d'intérêt avec chaque accumulateur consiste dans les étapes suivantes :
a) initialiser (120, 140) les éléments unitaires (7,8,9) de l'accumulateur matriciel (ACC1,ACC2);
b) identifier à partir de l'image d'un objet postal courant des pixels d'intérêt représentatifs de ladite zone d'intérêt , incrémenter d'une unité les éléments unitaires d'accumulation (7, 8, 10) de l'accumulateur matriciel (ACC1, ACC2) qui coïncident avec lesdits pixels d'intérêt et répéter l'étape b) avec d'autres objets postaux successifs de la filante pour consolider (150, 190) ledit accumulateur matriciel (ACC1, ACC2);
c) délimiter (200, 210) ladite zone d'intérêt de l'image dans le traitement de reconnaissance par OCR à partir des éléments unitaires d'accumulation (7, 8, 10) de l'accumulateur matriciel (ACC1, ACC2) consolidé qui présentent une valeur d'accumulation extremum,
**en ce que** l'identification de pixels d'intérêt pour consolider ledit accumulateur matriciel (ACC1 d'un premier type consiste à dériver du traitement de reconnaissance par OCR pour un objet postal de la filante une indication de position spatiale d'un bloc de pixels dans lequel le traitement de reconnaissance par OCR a reconnu de façon univoque ladite certaine information, les pixels dudit bloc de pixels constituant des pixels d'intérêt,
et **en ce que** l'identification de pixels d'intérêt pour consolider ledit accumulateur matriciel (ACC2) d'un second type consiste à dériver par construction et corrélation graphique locale de blocs de pixels d'image, une carte de flots optiques (9) indicative de mouvements graphiques locaux de pixels entre deux images d'objets postaux différents de la filante, les pixels d'image correspondant à ces mouvements graphiques constituant des pixels d'intérêt, ladite carte de flots optiques (9) permettant le suivi dynamique des mouvements desdits éléments unitaires (7,8,10) d'accumulation et renforçant ainsi la robustesse de détection de ladite zone d'intérêt.

2. Procédé selon la revendication 1, **caractérisé en ce que** la carte de flots optiques (9) est calculée à l'aide d'une méthode de corrélation graphique locale entre des blocs de pixels des deux images d'objets postaux de la filante.

3. Procédé selon l'une des revendications 1 et 2, **caractérisé en ce que** ladite certaine information est une information d'adresse de destinataire de l'objet postal.

4. Procédé selon la revendication 1, **caractérisé en ce que** la dite certaine information est une information d'adresse d'expéditeur de l'objet postal.

5. Procédé selon la revendication 1, **caractérisé en ce que** ladite certaine information est une information d'affranchissement.

6. Procédé selon la revendication 1, **caractérisé en ce que** ladite certaine information est une indication picturale.

7. Machine de traitement du courrier postal, en particulier pour le tri du courrier postal dans des sorties de tri (5) d'un convoyeur de tri, comprenant un système d'acquisition d'images (3) connecté à une unité de traitement de données et de contrôle/commande (4), **caractérisé en ce que** ladite unité (4) est agencée pour mettre en oeuvre le procédé selon l'une des revendications précédentes.

## Patentansprüche

1. Verfahren zur Verarbeitung von postalischem Sendungsgut, bei dem unterstellt wird, dass postalische Gegenstände Teil einer/s Folge homogener postalischer Gegenstände oder Laufs sind, und für jeden postalischen Gegenstand des Laufs eine OCR-Erkennungsbehandlung einer in einer interessierenden Zone eines Bildes des postalischen Gegenstandes zu erkennenden bestimmten Information erfolgt, wobei die interessierenden Zone dem Lauf im Speicher zugeordnet ist, um die OCR-Erkennungsbehandlung zu stärken,
**dadurch gekennzeichnet,**
**dass** es einen Matrix-Akkumulator (ACC1) eines ersten Typs, dessen den Bildpunkten des Bildes eines postalischen Gegenstandes entsprechende einheitliche Akkumulator-Elemente des Laufs ausgehend von Angaben, die aus der OCR-Erkennungsbehandlung in den aufeinander folgenden Bildern der Gegenstände des Laufs abgeleiteten Angaben inkrementiert werden, und einen Matrix-Akkumulator (ACC2) eines zweiten Typs, dessen den Bildpunkten des Bildes eines postalischen Gegenstandes des Laufs entsprechende einheitliche Akkumulator-Elemente ausgehend von aus Karten optischer Flüsse abgeleiteten Angaben inkrementiert werden, einsetzt,
**dass** der Matrix-Akkumulator (ACC2) zweiten Typs zunächst eingesetzt wird zum Begrenzen der interessierenden Zone in den Bildern erster postalischer Gegenstände des Laufs und anschließend der Matrix-Akkumulator (ACC1) ersten Typs eingesetzt wird zum Begrenzen der interessierenden Zone in den Bildern zweiter postalischer Gegenstände, die den ersten postalischen Gegenständen in der Folge der postalischen Gegenstände des Laufs folgen,
**dass** die Begrenzung einer interessierenden Zone mit jedem Akkumulator aus den folgenden Schritten besteht:
a) Initialisieren (120, 140) der einheitlichen Elemente (7, 8, 9) des Matrix-Akkumulators (ACC1, ACC2);
b) Identifizieren der die interessierende Zone repräsentierenden interessierenden Bildpunkte ausgehend von dem Bild eines laufenden postalischen Gegenstands, Inkrementieren um eine Einheit der einheitlichen Akkumulator-Elemente (7, 8, 10) des Matrix-Akkumulators (ACC1, ACC2), die mit den interessierenden Bildpunkten übereinstimmen, und Wiederholen des Schritts b) mit anderen aufeinander folgenden postalischen Gegenständen des Laufs zum Konsolidieren (150, 190) des Matrix-Akkumulators (ACC1, ACC2);
c) Begrenzen (200, 210) der interessierenden Zone des Bildes in der OCR-Erkennungsbehandlung ausgehend von einheitlichen Akkumulator-Elementen (7, 8, 10) des konsolidierten Matrix-Akkumulators (ACC1, ACC2), die einen Akkumulator-Extremwert aufweisen,
**dass** die Identifikation der interessierenden Bildpunkte zum Konsolidieren der Akkumulator-Matrix (ACC1) ersten Typs darin besteht, aus der OCR-Erkennungsbehandlung für einen postalischen Gegenstand des Laufs eine Angabe der räumlichen Position eines Bildpunkteblocks abzuleiten, bei dem die OCR-Erkennungsbehandlung auf eindeutige Weise die bestimmte Information erkannt hat, wobei die Bildpunkte des Bildpunkteblocks die interessierenden Bildpunkte bilden, und
**dass** die Identifikation der interessierenden Bildpunkte zum Konsolidieren des Matrix-Akkumulators (ACC2) zweiten Typs darin besteht, durch Bildung und lokale graphische Korrelation von Bild-Bildpunkteblöcken eine lokale graphische Bewegungen von Bildpunkten zwischen zwei verschiedenen Bildern postalischer Gegenstände des Laufs angebende Karte optischer Flüsse (9) abzuleiten, wobei die Bild-Bildpunkte diesen die interessierenden Bildpunkte bildenden graphischen Bewegungen entsprechen, wobei die Karte optischer Flüsse (9) die dynamische Verfolgung der Bewegungen der einheitlichen Elemente (7, 8, 10) erlaubt und so die Robustheit der Erfassung der interessierenden Zone verstärkt.

2. Verfahren nach Anspruch 1, **dadurch gekennzeichnet, dass** die Karte optische Flüsse (9) berechnet wird mittels eines Verfahrens zur lokalen graphischen Korrelation zwischen Bildpunkteblöcken der zwei Bilder postalischer Gegenstände des Laufs.

3. Verfahren nach einem der Ansprüche 1 und 2, **dadurch gekennzeichnet, dass** die bestimmte Information eine Adressinformation des Empfängers des postalischen Gegenstands ist.

4. Verfahren nach Anspruch 1, **dadurch gekennzeichnet, dass** die bestimmte Information eine Adressinformation des Absenders des postalischen Gegenstands ist.

5. Verfahren nach Anspruch 1, **dadurch gekennzeichnet, dass** die bestimmte Information eine Frankierinformation ist.

6. Verfahren nach Anspruch 1, **dadurch gekennzeichnet, dass** die bestimmte Information eine bildliche Information ist.

7. Maschine zur Verarbeitung von postalischem Sendungsgut, insbesondere für die Sortierung des postalischen Sendungsguts in Sortierausgängen (5) eines Sortierförderers, umfassend ein System zur Bilderfassung (3), das mit einer Datenverarbeitungs- und Steuer/Regelungseinheit (4) verbunden ist, **dadurch gekennzeichnet, dass** die Einheit (4) ausgebildet ist zur Ausführung des Verfahrens nach einem der vorhergehenden Ansprüche.

## Claims

1. A method of processing mail, in which method it is assumed that mailpieces belong to a succession of uniform mailpieces or run, and for each mailpiece in the run, OCR is performed on certain information to be recognized in a zone of interest of an image of said mailpiece, said zone of interest being associated in a memory with said run so as to force said OCR thereon, **characterized in that** it uses a first type of matrix accumulator (ACC1) in which the unitary accumulation elements corresponding to the image pixels of a run mailpiece, are incremented from indications derived from the OCR in the successive images of the run mailpieces, and a second type of matrix accumulator (ACC2) in which unitary accumulation elements corresponding to the image pixels of the run mailpiece are incremented from derived information of optical flow maps,
**in that** the second type of matrix accumulator (ACC2) is firstly used to delimit said zone of interest in the images of the run first mailpieces and then, the first type matrix accumulator (ACC1) is used to delimit said zone of interest in the images of the second mailpieces subsequent to the first mailpieces in the succession of the run mailpieces,
**in that** the delimitation of a zone of interest with each accumulator consists in the following steps:
a) initializing (120, 140) the unitary elements (7, 8, 9) of the matrix accumulator (ACC1, ACC2);
b) identifying on the basis of the image of a current mailpiece, pixels of interest that are representative of said zone of interest, incrementing by one unit the unitary accumulation elements (7, 8, 10) of the matrix accumulator (ACC1, ACC2) that coincide with said pixels of interest and repeat step b) with other successive run mailpieces to consolidate (150, 190) said matrix accumulator (ACC1, ACC2);
c) defining (200, 210), said zone of interest of the image in the OCR processing on the basis of the unitary accumulation elements (7, 8, 10) of the consolidated matrix accumulator (ACC1, ACC2) that present extreme accumulation values;
and **in that**, the pixels of interest identification for consolidating said first type matrix accumulator (ACC1) consists to derivate from the OCR processing for a run mail piece an indication of the spatial position of a pixels block in which the OCR processing has recognized said certain information unambiguously, the pixels of said pixels block constituting pixels of interest;
and **in that** the identification of pixels of interest for consolidating said second type of matrix accumulator (ACC2) consists to derivate by construction and local graphical correlation of blocks of image pixels, an optical flap map (9) that indicates the local graphical movements of pixels between two images of different run mailpieces, the image pixels corresponding to such graphical movements constituting pixels of interest, said optical flow map (9) enabling the movements of said unitary accumulation elements (7, 8, 10) to be tracked dynamically, and thus reinforcing the robustness of detection of said zone of interest.

2. A method according to claim 1, **characterized in that** the optical flow map (9) is computed using a method of local graphical correlation between blocks of pixels of the two images of the run mailpieces.

3. A method according to claims 1 and 2, **characterized in that** said certain information is a recipient address information indicating the address of the recipient of the mailpiece.

4. A method according to claim 1, **characterized in that** said certain information is a sender address information indicating the address of the sender of the mailpiece.

5. A method according to claim 1, **characterized in that** said certain information is a franking information.

6. A method according to claim 1, **characterized in that** said certain information is a pictorial indication.

7. A machine for processing mail, in particular for sorting mail into sorting outlets (5) of a sorting conveyor, said machine including an image acquisition system (3) connected to a data-processing and monitoring-and-control unit (4), **characterized in that** said unit (4) is arranged to implement the method according to one of the preceding claims.
